(19) Europäisches Patentamt

European Patent Office

Office européen des brevets

(11) **EP 0 579 905 B1**

(12) **EUROPÄISCHE PATENTSCHRIFT**

(45) Veröffentlichungstag und Bekanntmachung des Hinweises auf die Patenterteilung:
**24.07.1996 Patentblatt 1996/30**

(51) Int Cl.[6]: **G02B 6/10**, G02B 6/255, G02B 27/28

(21) Anmeldenummer: **93106109.7**

(22) Anmeldetag: **15.04.1993**

(54) **Faseroptischer Depolarisator**

Fiber optic depolariser

Dépolarisateur à fibre optique

(84) Benannte Vertragsstaaten:
**DE FR GB IT**

(30) Priorität: **10.07.1992 DE 4222658**

(43) Veröffentlichungstag der Anmeldung:
**26.01.1994 Patentblatt 1994/04**

(73) Patentinhaber: **Daimler-Benz Aerospace Aktiengesellschaft**
**D-81663 München (DE)**

(72) Erfinder:
• **Hartl, Engelbert, Dr.**
  **W-8000 München (DE)**
• **Müller, Reinhard, Dr.**
  **W-8039 Puchheim (DE)**
• **Poisel, Hans, Dr.**
  **W-8505 Röthenbach (DE)**

(56) Entgegenhaltungen:
**EP-A- 0 416 639**          **GB-A- 2 135 475**

• **PATENT ABSTRACTS OF JAPAN vol. 12, no. 76 (P-675) 22. September 1987 ; & JP-A-62 215 903**
• **JOURNAL OF THE OPTICAL SOCIETY OF AMERICA - A, Bd. 5, Nr. 11, Oktober 1988, New York US, Seiten 454-466; K. TAKADA et al.: 'New diagrammatical method for calculation of fiber-optic Lyot depolarizer performance'**
• **APPLIED OPTICS, Bd. 24, Nr. 15, Oktober 1985, New York US, Seiten 2346-2350; Y. KATO : 'Fusion splicing of polarization preserving fibers'**

**Beschreibung**

Die Erfindung bezieht sich auf ein Verfahren zur Herstellung eines faseroptischen Depolarisators sowie auf einen faseroptischen Depolarisator, der zwei polarisationserhaltende Lichtleitfaserabschnitte mit linearer Doppelbrechung aufweist, die derart miteinander in Verbindung stehen, daß die Hauptachsen der Lichtleitfaserabschnitte einen Winkel von 45° einschließen.

Optische Lichtleitfasern sind auf dem Gebiet optischer Kommunikationssysteme oder in anderen Bereichen, beispielsweise auf dem Gebiet interferometrischer Sensorik von besonders großem Interesse. Optische Kommunikationssysteme bestehen üblicherweise aus einer Lichtquelle und einem Photodetektor, die über eine optische Lichtleitfaser miteinander verbunden sind. Darüberhinaus können je nach Anwendung des optischen Systems innerhalb des Lichtweges entlang der Lichtleitfaser zusätzlich optische Bauelemente integriert werden, die die Ausbreitungscharakteristik des Lichtes verändern.

Derartige Bauelemente sind beispielsweise Polarisatoren, die die Schwingungsebene der sich in der Lichtleitfaser ausbreitenden elektromagnetischen Welle beeinflussen und zur Modulation der Lichtsignale beitragen. Darüberhinaus sind wellenlängenselektive Filtersysteme bekannt, beispielsweise Lyotfilter o. ä., die ausführlich in der US-PS 4,606,605 beschrieben sind.

Auf dem Gebiet der interferometrischen Sensorik, spielen sogenannte Depolarisatoren, d.h. optische Elemente, die polarisiertes Licht in unpolarisiertes Licht umwandeln, eine wichtige Rolle. So sind Depolarisatoren für den fehlerfreien Betrieb von Faserkreiselsystemen erforderlich, die im wesentlichen einer optischen Spulenanordnung entsprechen und aus Kostengründen bevorzugt aus nicht doppelbrechenden Lichtleitfasermaterial bestehen. Insbesondere zur Unterdrückung von sogenannten Kreiselfehlersignalen, die in Zusammenhang mit den unterschledllchen Polarisationszuständen einzelner Lichtwellenzüge innerhalb des Faserkreisels statistisch entstehen, dienen Depolarlsatoren zur Auslöschung derartiger Störsignale.

Erst durch den Einsatz von Depolarlsatoren ist es möglich, Faserkreiselsysteme aus nicht doppelbrechenden Lichtleitfasermaterialien herzustellen, die erheblich kostengünstiger als solche aus doppelbrechenden Lichtleitfasern sind.

Bekannte faseroptische Depolarlsatoren bestehen aus zwei polarisationserhaltenden Lichtleitfaserabschnitten, die derart miteinander verbunden sind, daß deren Hauptachsen einen Winkel von 45° einschließen. Die Güte der Depolarisation hängt entscheidend davon ab, wie genau der Winkel von 45° eingestellt werden kann. Derartige Depolarisatoren sind aus GB-A-2 135 475 bekannt.

Bei der Herstellung von Depolarlsatoren ist besonders darauf zu achten, daß die Hauptachsen beider zusammenzuführenden Lichtleitfasern in der gewünschten Orientierung zueinander stehen. Ist dies der Fall, so können die Faserenden fest miteinander verbunden werden. Die Faserenden werden bis auf ihre Schmelztemperatur erhitzt und anschließend in eine feste innige Verbindung gebracht. Diese Art der Verbindung zweier Llchtleitfasern wird auch als "Spleißen" bezeichnet.

Die in den Fasern im kalten Zustand enthaltenen Spannungen können sich dabei aufgrund der Erwärmung und Ausdehnung des Materials lösen und die Richtung der Hauptachsen gegenüber dem kalten Zustand verdrehen. Die Verdrehung der Hauptachsen tritt bevorzugt beim Spleißen von Fasern auf, deren Doppelbrechung auf mechanischen Spannungen beruht, die im Rahmen der Herstellung entstanden sind.

Derartige Spannungen treten über den Querschnitt der Faser nicht gleich verteilt auf, so daß Spleißverbindungen von doppelbrechenden Fasern mit einem Winkel von 45° zwischen den Hauptachsen besonders kritisch sind, da die Spannungen in den zu spleißenden Stirnflächen in jeweils verschiedenen Teilen der Querschnitte wirken. Abweichungen vom 45° Winkel können mit dem beschriebenen Verfahren nach dem Spleißvorgang nicht mehr korrigiert werden, so daß der Depolarisator seine optimale Güte nicht erlangen kann.

Die der Erfindung zugrunde liegende Aufgabe besteht darin, ein Verfahren zur Herstellung eines faseroptischen Depolarisators sowie einen faseroptischen Depolarisator selbst anzugeben, der aus zwei polarisationserhaltenden Lichtleitfaserabschnitten besteht, die derart miteinander in Verbindung stehen, daß die Hauptachsen der Lichtleitfaserabschnitte einen Winkel von 45° einschließen, so daß während der Herstellung störende Verschiebungen der Hauptachsen weitgehend vermieden werden und leichte Lagekorrekturen der Haupachsen nach dem Spleißvorgang für eine hochgenaue Anpassung der Hauptachsenlage möglich ist. Der erfindungsgemäße Depolarisator soll insbesondere die Optimierung seiner Güte nach dem Zusammenfügen der einzelnen Lichtleitfaserabschnitten erlauben.

Eine erfindungsgemäße Lösung dieser Aufgabe ist in den Patentansprüchen 1 und 7 angegeben. Weiterbildungen der Erfindung sind in den Unteransprüchen enthalten.

Erfindungsgemäß werden bei der Herstellung des faseroptischen Depolarisators zwei polarisationserhaltende Lichtleitfasern derart relativ zueinander ausgerichtet, daß ihre Hauptachsen einen Winkel von möglichst genau 45° einschließen. Zwischen diese Lichtleitfaserabschnitte wird erfindungsgemäß ein nicht polarisationserhaltendes Lichtleitfaserstück eingebracht. Alle Lichtleitfasern werden durch Spleiße fest miteinander verbunden.

Der Vorteil des erfindungsgemäßen Verfahrens besteht darin, daß das nicht polarisationserhaltende Faserstück keine oder sehr wenig mechanische Spannungen enthält. Dadurch ist das Verspleißen weniger kritisch. Ein weiterer Vorteil besteht darin, daß die genaue Justierung des Depolarisators nach dem Verspleißen der drei Faserstücke erfolgen kann.

Hierbei wird erfindungsgemäß eine Spleißverbindung festgehalten, während die andere Spleißverbindung torsional verdrillt wird. Die Verdrillung muß solange vorgenommen werden bis der Hauptachsenangleich von 45° erfolgt ist. Die Kontrolle des 45°-Winkels erfolgt z. B. durch Messung der Restpolarisation nach dem Polarisator.

Die Feinjustage des 45°-Winkels nach dem Verspleißen beruht darauf, daß das Licht in hoch doppelbrechenden Fasern, also in den polarisationserhaltenden Lichtleitfaserabschnitten, den gedrehten Hauptachsen folgt, nicht aber in schwach doppelbrechenden Fasern, wie beispielsweise in den nicht polarisationserhaltenden Lichtleitfasern. Siehe hierzu: R. Ulrich, A. Simon: "Polarisation Optics of Twistes Single Mode Fibres", Applied Optics, Vol. 18, 1979, Seite 2241 bis 2251.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:

Fig.1    eine erfindungsgemäße Lichtleitfaseranordnung und

Fig.2    eine verklebte erfindungsgemäße Lichtleitfaseranordnung.

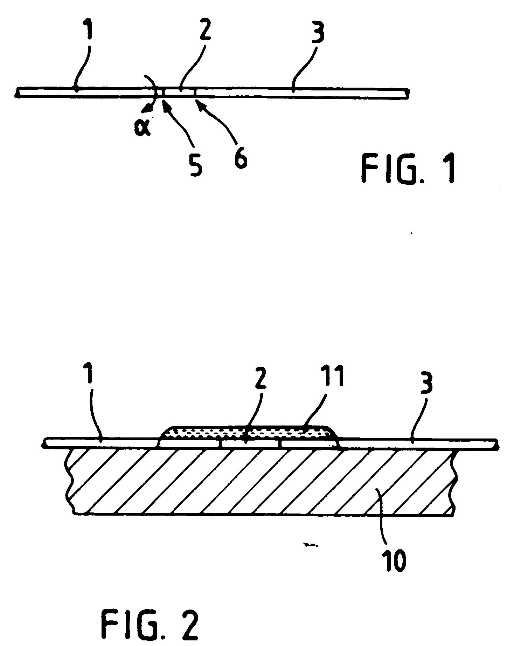

In Figur 1 ist ein erfindungsgemäßer faseroptischer Depolarisator dargestellt, der aus den polarisationserhaltenden Lichtleitfaserabschnitten 1 und 3 besteht, die über ein nicht polarisationserhaltendes Lichtleitfaserstück 2 verbunden sind. Bei der Herstellung werden die Spleißstellen bzw. die Verbindungsbereiche 5, 6 durch thermisches Verspleißen miteinander verbunden. Etwaige kleine Abweichungen von der 45°-Einstellung der Hauptachsen der Lichtleitfaserabschnitte 1 und 3 können durch nachträgliches Verdrillen korrigiert werden.

Hierzu wird beispielsweise die Spleißstelle bzw. der Verbindungsbereich 5 der Lichtleitfasern 2 und 3 festgehalten sowie die Spleißstelle bzw. der Verbindungsbereich 5 der Lichtleitfasern 1 und 2 so um einen Winkel α gedreht, bis die Hauptachsen der Fasern 1 und 3 45° einschließen. Hierbei werden die Fasern 1 und 2 leicht verdrillt.

Wird beispielsweise linear polarisiertes Licht in eine Hauptachse der Faser 1 eingestrahlt, so wird dieses Licht bei der Drehung der Verbindungsstelle 5 um den Winkel α mitgedreht. In der entgegengesetzt zur Lichtleitfaser 1 verdrillten schwach doppelbrechenden Lichtleitfaser 2 wird dieses Licht nicht mehr um den Winkel * zurückgedreht, sondern nur um einen Bruchteil dieses Winkels.

Da die Verdrillung der Lichtleitfaser 2 und damit der 45° Winkel zwischen den Hauptachsen 1 und 3 aufrechterhalten werden muß, müssen die Spleißstellen bzw. Verbindungsbereiche 5 und 6 fixiert werden. Gemäß Figur 2 geschieht dies dadurch daß die Lichtleitfasern mit einem Kleber 11 auf einer Grundlage 10 festgeklebt werde. Eine besonders stabile Anordnung ergibt sich, wenn man die Lichtleitfaserbereiche, die den Depolarisator darstellen, in ein Metall-oder ein Glasröhrchen einklebt. Eine weitere Fixiermöglichkeit besteht in zwei Halbröhrchen, in die die Fasern eingeklebt werden können.

Die Längen der drei Lichtleitfaserstücke, die in der beschriebenen Kombination den erfindungsgemäßen Depolarisator bilden setzten sich nach folgenden Maßgaben zusammen:

Die Langen l1 und l3 der Lichtleitfaserstücke 1 und 3 sowie die Differenz (L1-L3) müssen größer sein als die Depolarisationslänge LD. Die Depolarisationslänge hingegen hängt von der Kohärenzlänge LC und der Mittenwellenlänge λ0 der Lichtquelle und der Beatlänge LB der doppelbrechenden Faser ab. Hierzu gilt folgender formale Zusammenhang:

$$LD = LC * LB / \lambda 0$$

Die Lichtleitfaser 2 hingegen ist relativ kurzes Stück, das nur einige Millimeter oder Zentimeter mißt.

## Patentansprüche

1.   Verfahren zur Herstellung eines faseroptischen Depolarisators, der aus zwei polarisationserhaltenden Lichtleitfaserabschnitten mit linearer Doppelbrechung (1,3) besteht, die derart miteinander verbunden sind, daß die Hauptachsen der Lichtleitfaserabschnitte (1,3) möglichst genau einen Winkel von 45° einschließen, gekennzeichnet durch folgende Verfahrensschritte: - zwischen den Lichtleitfaserabschnitten (1,3) wird ein nicht polarisationserhaltendes Lichtleitfaserstück (2) eingesetzt, - die Lichtleitfaserabschnitte (1,3) und das Lichtleitfaserstück (2) werden an ihren Verbindungsbereichen (5,6) miteinander fest verbunden, - die Hauptachsenorientierungen der Lichtleitfaserabschnitte (1,3) werden zueinander justiert, indem bei fester Positionierung eines der beiden Verbindungsbereiche (5,6) durch torslonales Verdrillen des anderen Verbindungsbereiches ein Winkel von 45° zwischen den Hauptachsen der Lichtleitfaserabschnitte (1,3) eingestellt wird.

2.   Verfahren nach Anspruch 1, dadurch gekennzeichnet, daß die feste Verbindung zwischen den einzelnen Llchtleitfasern (1,2,3) durch thermisches Spleißen erfolgt.

3.   Verfahren nach Anspruch 1 oder 2, dadurch gekennzeichnet, daß nach dem Verdrillen der Lichtleitfasern die relative Lage der Verbindungsbereiche (5,6) fixiert wird.

4. Verfahren nach Anspruch 3, dadurch gekennzeichnet, daß die Lichtleitfaserabschnitte (1,2,3) im Bereich der Verbindungsbereiche (5,6) mit einem Kleber (11) auf einem Träger bzw. einer Grundlage (10) festgeklebt werden.

5. Verfahren nach Anspruch 3, dadurch gekennzeichnet, daß die Lichtleitfaserabschnitte (1,2,3) im Bereich der Verbindungsabschnitte (5,6) mit einem festen Röhrchen überzogen werden, das mit den Lichtleitfaserabschnitten (1,2,3) verklebt wird.

6. Verfahren nach Anspruch 5, dadurch gekennzeichnet, daß das Röhrchen aus Metall oder Glas besteht.

7. Verfahren nach einem der Ansprüche 1 bis 6, dadurch gekennzeichnet, daß die Justage der Hauptachsenorientierungen auf einen Winkel von 45° durch Messung der Restpolarisation nach dem Depolarlsator kontrolliert wird.

8. Faseroptischer Depolarisator, der aus zwei polarisations - erhaltenden Lichtleitfaserabschnitten (1,3) mit linearer Doppelbrechung besteht, die derart miteinander verbunden sind, daß die Hauptachsen der Lichtleitfaserabschnitte (1, 3) einen Winkel von 45° einschließen, dadurch gekennzeichnet, daß die Lichtleitfaserabschnitte (1,3) über eine nicht polarisationserhaltende Lichtleitfaser (2) miteinander fest verbunden sind, wobei einer der Verbindungsbereiche (5,6) zwischen der Lichtleifaser (2) und einem der Faserabschnitte (1,3) torsional verdrillt ist.

9. Faseroptischer Depolarlsator nach Anspruch 8, dadurch gekennzeichnet, daß die Längen L1 und L3 der Lichtleitfaserabschnitte (1,3) gegeben sind durch:

L1 > LD und L3 > LD und L1 - L3 > LD mit

$$LD = LC * LB / \lambda0$$

LD: Depolarisationslänge
LC: Kohärenzlänge
LB: Beatlänge
$\lambda0$: Mittenwellenlänge des durch die Faseranordnung übertragenen Llchts

10. Faseroptischer Depolarisator nach Anspruch 8 oder 9, dadurch gekennzeichnet, daß die Länge der Lichtleitfaser 2* im Bereich einiger mm oder cm liegt.

**Claims**

1. Method of manufacturing a fibre-optic depolarizer comprising two polarization sustaining optical fibre sections with linear birefraction (1, 3) which are interconnected in such a manner that the main axes of the fibre-optic sections (1, 3) include an angle of 45° as accurately as possible, **characterized by** the following methodical stages: - between the fibre-optic sections (1, 3) is inserted a not polarization sustaining fibre-optic element (2); - the fibre-optic sections (1, 3) and the fibre-optic element (2) are firmly interconnected in their connecting areas (5, 6); - the main axes orientations of the fibre-optic sections (1, 3) are aligned relative to each other in that an angle of 45° between the main axes of the fibre-optic sections (1, 3) is established with fixed positioning of one of the two connection areas (5, 6) by torsional drilling of the other connecting area.

2. Method according to Claim 1, **characterized in that** the fixed connection between the individual optical fibres (1, 2, 3) is established by way of thermal splicing.

3. Method according to Claim 1 or 2, **characterized in that** the relative position of the connection areas (5, 6) is fixed after drilling of the optical fibres.

4. Method according to Claim 3, **characterized in that** the optical fibre sections (1, 2, 3) are within the connection areas (5, 6) glued to a carrier or a base (10) by means of an adhesive (11).

5. Method according to Claim 3, **characterized in that** the optical fibre sections (1, 2, 3) are within the connection sections (5, 6) covered by a solid tubelet which is glued to the optical fibre sections (1, 2, 3).

6. Method according to Claim 5, **characterized in that** the tubelet is made of metal or glass.

7. Method according to one of Claims 1 to 6, **characterized in that** an adjustment of the main axes orientations to an angle of 45° is controlled by measuring the residual polarization after the depolarizer.

8. Fibre-optic depolarizer, comprising two polarization sustaining fibre-optic sections (1, 3) with linear birefraction, which are interconnected in such a manner that the main axes of the fibre-optic sections (1, 3) include an angle of 45°, **characterized in that** the fibre-optic sections (1, 3) are firmly interconnected via a not polarization sustaining optical fibre (2), and that one of the connecting areas (5, 6) is torsionally drilled between the optical fibre (2) and one of the fibre sections (1, 3).

9. Fibre-optic depolarizer according to Claim 8, **characterized in that** the lengths L1 and L3 of the fibre-optic sections (1, 3) are given by:

L1 > LD and L3 > LD and L1 - L3 > LD where

$$LD = LC * LB / \lambda 0$$

LD:    Depolarization length
LC:    Coherence Length
LB:    Beat Length
λ0:    Centred Wavelength of light transmitted by the fibre arrangement

10. Fibre-optic depolarizer according to Claim 8 or 9, **characterized in that** the length of the optical fibre 2 lies in the region of a few mm or cm.

## Revendications

1. Procédé de fabrication d'un dépolarisateur à fibres optiques composé de deux tronçons de fibres optiques (1, 3) conservant la polarisation, à réfraction double linéaire, qui sont connectés l'un à l'autre de manière telle que les axes principaux des tronçons de fibres optiques (1, 3) forment un angle de 45° aussi précis que possible, caractérisé par les étapes de procédé suivantes:

   - onplace entre les tronçons de fibre optique (1, 3) un morceau de fibre optique (2) qui ne conserve pas la polarisation,
   - rend solidaire les uns des autre les tronçons de fibres optiques (1,3) et le morceau de fibre optique (2) au niveau de leur zone de liaison (5, 6),
   - on ajuste entre elles les orientations des axes principaux des tronçons de fibre optique (1,3) par le fait que l'une des deux zones de liaison étant fixe, on règle par torsion de l'autre zone de liaison, un angle de 45° entre les axes principaux des tronçons de fibre optique (1, 3).

2. Procédé selon la revendication 1, caractérisé par le fait que la liaison fixe entre les différentes fibres optiques (1, 2, 3) est réalisée par épissurage thermique.

3. Procédé selon la revendication 1 ou 2, caractérisé par le fait qu'après torsion des fibres optiques on gèle la position relative des zones de liaison (5, 6).

4. Procédé selon la revendication 3, caractérisé par le fait que les tronçons de fibres optiques (1, 2, 3) sont collés à l'aide d'un adhésif (11) sur un support ou sur une base (10), dans la région des zones de liaison (5, 6).

5. Procédé selon la revendication 3, caractérisé par le fait que les tronçons de fibre optique (1, 2, 3), dans la région des zones de liaison (5, 6), sont revêtus d'un petit tube fixe qui l'on colle aux tronçons de fibres optiques (1, 2, 3).

6. Procédé selon la revendication 5, caractérisé par le fait que le petit tube est en métal ou en verre.

7. Procédé selon l'une des revendications 1 à 6, caractérisé par le fait que l'on contrôle le réglage à 45° de l'orientation de l'axe principal par mesure de la polarisation résiduelle en aval du dépolarisateur.

8. Dépolarisateur à fibres optiques composé de de ux tronçons de fibres optiques (1, 3) conservant la polarisation, à réfraction double linéaire, qui sont couplés l'un à l'autre de manière telle que les axes principaux des tronçons de fibres optiques (1, 3) forment un angle de 45°, caractérisé par le fait que les tronçons de fibres optiques sont liés l'un à l'autre par une fibre optique (2) ne conservant pas la polarisation, l'une des zones de liaison (5, 6) entre la fibre optique (2) et l'un des tronçons de fibres optiques (1, 3) subissant une torsion.

9. Dépolarisateur à fibres optiques selon la revendication 8, caractérisé par le fait que les longueurs L1 et L3 des tronçons de fibre optique (1, 3) sont définies par:

L1 > LD et L3 > LD et L1 - L3 > LD avec

$$LD = LC * LB / \lambda_0$$

LD:    longueur de dépolarisation
LC:    longueur de cohérence
LB:    longueur de battement
$\lambda_0$:    longueur d'onde moyenne de la lumière transmise par l'installation à fibre optique

10. Dépolarisateur à fibres optiques selon revendication 8 ou 9, caractérisé par le fait que la longueur de la fibre optique (2) est de l'ordre de quelques mm ou cm.

FIG. 1

FIG. 2